**Europäisches Patentamt**

**European Patent Office**

**Office européen des brevets**

(19)

(11) Publication number: **0 098 754**
A1

# (12) EUROPEAN PATENT APPLICATION

(21) Application number: **83303890.4**

(22) Date of filing: **04.07.83**

(51) Int. Cl.³: **A 61 C 1/14,** A 61 C 1/05

(30) Priority: **02.07.82 JP 101183/82**

(43) Date of publication of application: **18.01.84**
**Bulletin 84/3**

(84) Designated Contracting States: **AT BE CH DE FR GB LI**

(71) Applicant: **NAKANISHI DENTAL MFG. CO. LTD.,**
**340 Kamihinata, Kanuma City Tochigi (JP)**

(72) Inventor: **Nakanishi, Takasuke, 340 Kamihinata, Kanuma**
**City Tochigi Prefecture (JP)**

(74) Representative: **Leale, Robin George et al, FRANK B.**
**DEHN & CO. Imperial House 15-19 Kingsway, London**
**WC2B 6UZ (GB)**

(54) **Dental handpiece.**

(57)    A dental handpiece having means for releasably holding a
dental tool 24 comprises a handle portion 12 and a powerhead
assembly 14 mounting a driving sleeve 18 having, near to its
forward end, a forwardly facing internal taper 18b between a
smaller diameter rear portion 18c and a larger diameter front
portion 18d. A cylindrical chuck sleeve 26 having an axial tool-
receiving bore 26a, a rearwardly facing taper 26b, a smaller
diameter rear portion 26c and a larger diameter front portion
26d, corresponding to the similar portions of the driving sleeve
18, is slidably received in the bore 18a of the driving sleeve.
Three radial openings are located at equally spaced positions
around the tapered portion 26b of the chuck sleeve. A disc-
shaped chucking die 30 having a diameter to fit slidably in the
radial opening 28 is slidably received in each of the said
openings of the chuck to hold a dental tool. A chuck pusher 36
is held in a socket 34 with a disc plate spring 38 interposed
between the socket and the chuck pusher for axially displacing
the chuck to insert or release a dental tool.

- 1 -

"Dental handpiece"

This invention relates to dental handpieces, and more particularly to such a handpiece having improved means for opening and closing a chuck for a dental tool, to enable the user to exchange a dental tool easily.

In a convention dental handpiece, a cylindrical pusher with a plurality of longitudinal slots is pushed forward against the tapered inner periphery of the chuck so as to hold a dental tool firmly by the flexibility of the chuck. This requires a special tool to displace the cylindrical pusher, and the tool exchange operation using such a special tool is very troublesome for the user.

Viewed from one aspect the present invention provides a dental handpiece having means for releasably holding a dental tool therein comprising a chuck sleeve slidable in a driving sleeve therefor, at least one chucking die slidable in a substantial radial bore in the chuck sleeve wall, a forwardly facing taper on the inside wall of the driving sleeve arranged to urge the said chucking die into holding engagement with a tool inserted in the said chuck sleeve when the chuck sleeve is urged rearwardly in the driving sleeve to a tool holding position, resilient means for so urging the chuck sleeve, and manually operable release means for displacing the chuck sleeve forwardly against said resilient means to release the said tool.

Some embodiments of the invention will now be described by way of example and with reference to the accompanying drawings, in which:-

FIG. 1 is a fragmentary enlarged axial sectional view of a first embodiment of a dental handpiece according to this invention, with a dental tool inserted;

FIG. 2 is a similar view of the dental handpiece, with the dental tool released therefrom;

FIG. 3 is an elevation partly in section along the lines III - III of FIG. 1;

FIG. 4 is an elevation partly in section along the lines IV - IV of FIG. 2;

FIG. 5 is an exploded perspective view of the relevant parts of dental handpiece shown in FIGS. 1 and 2, with the chuck sleeve shown removed from the driving sleeve and the driving sleeve partially cut away;

FIG. 6 is an elevation partly in section of another embodiment of a dental handpiece, taken similarly to FIG. 4;

FIG. 7 is a perspective view of a chucking die inserted into a radial opening of the chuck sleeve;

FIG. 8 is a perspective view of still another embodiment of the dental handpiece shown in FIGS. 1 and 2, with its chucking die taken out; and

FIG. 9 is a fragmentary enlarged vertical sectional view of the dental handpiece shown in FIG. 8.

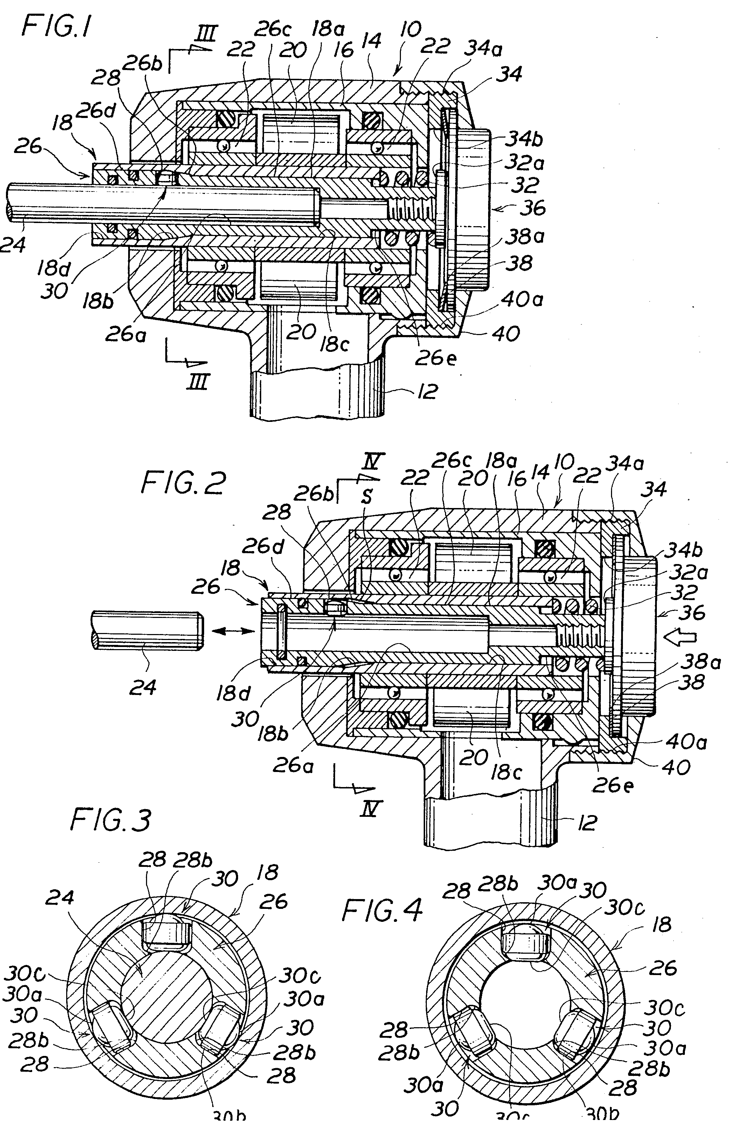

Referring first to FIGS. 1 to 5, a dental handpiece 10 includes a handle portion 12 and a powerhead assembly 14 which is integral with and perpendicular to the handle portion 12.

Secured in the handle portion 12 of the dental handpiece 10 is a bearing retainer 16, in which a driving sleeve 18 having a cylindrical bore 18a and a plurality of radial turbine blades 20 around its periphery is journalled for rotation by means of bearings 22. As particularly shown in FIGS. 1,2 and 5, the inside wall of the driving sleeve 18 has, near to its forward end, a forwardly facing outwardly tapering portion 18b which separates a smaller diameter rear portion 18c from a larger diameter front portion 18d thereof.

At the lower end of the powerhead assembly 14 is a pneumatic motor (not shown) which, when energized, operates on the blades 20 of the sleeve 18 to rotate at high speed a dental tool shown at 24.

A cylindrical chuck sleeve 26 has a tool receiving bore 26a. The outside wall of the sleeve 26 has a rearwardly facing tapered portion 26b, a smaller diameter rear portion 26c, and a larger diameter front portion 26d, corresponding respectively to the forwardly facing taper 18b, the smaller diameter rear portion 18c, and the larger diameter front portion 18d of the driving sleeve 18, and the chuck sleeve is slidably received in the bore 18a of the driving sleeve 18.

Three openings 28 are formed radially at equally spaced intervals in the tapering portion 26b of the chuck sleeve 26. A disc-shaped chucking die 30 fits slidably in each of the radial openings 28 and has a peripherally stepped flat bottom portion 30c which projects slightly into the tool receiving bore 26a of the chuck sleeve.

At the rearward end portion of the chuck sleeve 26 is a stepped portion 26e, around which a helical compression spring 32 is wound. The rear end of the spring 32 bears against a spring seat 32a and its forward end bears on the rear end of the driving shaft 18, thus always urging the chuck 26 rearwardly.

A socket 34 having external peripheral threads 34a and a large central opening 34b forms an end portion of the bearing retainer 16. Tool release means in the form of a chuck sleeve pusher 36 is held in the socket 34, with a disc plate spring 38 interposed between the face of the socket 34 and the chuck pusher 36, thus always urging the pusher 36 rearwardly. A large opening 38a is formed centrally of the disc plate spring 38. A cap 40 having internal peripheral threads 40a is screwed onto external threads 14a of the powerhead assembly 14 and the external peripheral threads 34a of the socket 34.

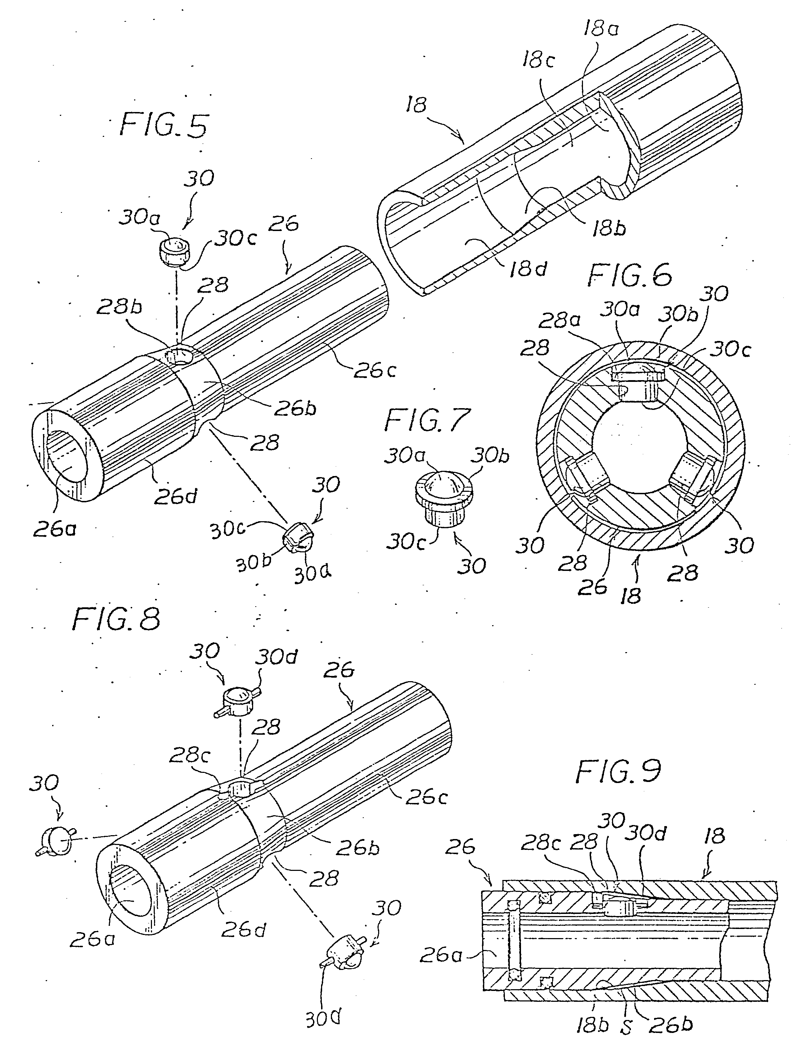

In FIGS. 6 and 7, another embodiment of the

- 4 -

chucking die 30 is shown, in which an annular step 28a is formed in the radial opening 28 in the chuck sleeve 26, and an annular flange 28b is provided around a bottom portion of the radial opening 28. A disc-shaped chucking die 30 having a diameter to fit into the radial opening 28, an umbrella-shaped head 30a, an annular flange 30b and a peripherally stepped flat bottom 30c, is a snug sliding fit in the radial opening 28 with its flat bottom 30c projecting slightly into the bore 26a of the chuck sleeve 26.

FIG. 8 is a perspective view of the relevant parts of another modification of the dental handpiece shown in FIGS. 1 and 2, wherein a pair of slots 28c are formed diametrically and longitudinally of the opening 28 at the outer end thereof and a disc-shaped chucking die 30 having a pair of diametrically opposed supporting legs 30d is snugly slidably received in the opening 28. FIG. 9 shows how the chucking die 30 is snugly received in the radial opening 28 and its supporting legs 30d are also received in the slots 28b thereof with the legs 30d resting on the bottom of the slots. Accordingly, the chucking die 30 may be located perpendicularly to the axis of the chuck sleeve 26.

When the dental tool 24 is inserted into the handpiece 10 for chucking, the chuck pusher 36 is pushed forwardly by a finger tip as shown by the arrow in FIG. 2 so as to compress the helical compression spring 32 and displace the chuck sleeve 26 forwardly, thereby forming a space S between the forwardly facing taper 18b of the driving shaft 18 and the rearwardly facing taper 26b of the chuck sleeve 26, into which space the disc-shaped dies 30 are able to be shifted radially outwardly.

In this condition, the dental tool 24 is inserted by the fingers into the bore 26a of the chuck sleeve 26, and the disc-shaped dies 30, whose peripherally stepped flat bottom portions 30c project into the bore 18a, are forced

0098754

- 5 -

to move radially outwardly into contact with the driving shaft 18 and to project their umbrella-shaped head portions 30a into the space S.

When the finger tip is disengaged from the chuck pusher 36, the chuck sleeve 26 is displaced axially rearwardly by the force of the helical compression spring 32 to narrow the space S, so as to firmly engage the disc-shaped dies 30 between the taper 18a of the driving sleeve 18 and the outer surface of the dental tool 24, thereby securing the tool in the chuck sleeve 26 as shown in FIG.1.

When it is desired to release the dental tool 24, the chuck pusher 36 is again pushed forwardly by the finger tip to displace the chuck sleeve 26 forwardly, thus again forming the space S and allowing the chucking dies 30 to move into the space S, and enabling the user to pull the dental tool 24 out quite easily.

In an alternative arrangement the spring 32 can be a tension spring secured at its respective ends to the driving sleeve 18 and the spring seat 32a.

It will thus be seen that at least in its preferred and illustrated embodiments this invention provides a dental handpiece having improved means for closing and opening a chuck whereby dental tools such as drills, buffers, reamers and or the like can be easily and quickly chucked in or released from the chuck of the dental handpiece, by merely pressing a chuck pusher by a finger tip, whereby the user is able to change the dental tool in the dental handpiece for another one in a simple and fast manner and with ease of operation. At the same time the device is comparatively simple and small in construction and also desirably rigid, strong and durable.

Claims:-

1.   A dental handpiece having means for releasably holding a dental tool therein comprising a chuck sleeve (26) slidable in a driving sleeve (18) therefor, at least one chucking die (30) slidable in a substantial radial bore (28) in the chuck sleeve wall, a forwardly facing taper (18b) on the inside wall of the driving sleeve arranged to urge the said chucking die into holding engagement with a tool (24) inserted in the said chuck sleeve when the chuck sleeve is urged rearwardly in the driving sleeve to a tool holding position, resilient means (32) for so urging the chuck sleeve, and manually operable release means (36) for displacing the chuck sleeve forwardly against said resilient means to release the said tool.

2.   A dental handpiece having means for opening and closing a chuck thereof, comprising a handle portion (12) and a powerhead assembly (14) which is supported on a top end of said handle portion; a bushing (16) secured in said powerhead assembly; a hollow driving sleeve (18) having a plurality of radial turbine blades (20) around its periphery and journalled for rotation in said bushing by means of bearings (22), said driving sleeve having, near to its forward end, a forwardly facing internal taper (18b) between a larger diameter forward portion (18c) and a smaller diameter rear portion (18d) extending through a substantial length of said powerhead assembly;  a cylindrical chuck sleeve (26) axially and slidably received in said hollow driving sleeve, said cylindrical chuck sleeve having a rearwardly facing external taper (26b), a larger diameter forward portion (26c) and a smaller diameter rear portion (26d) each corresponding to said forwardly facing taper (18b), said larger diameter portion (18c) and said smaller diameter portion (18d) respectively of said driving sleeve, said tapered portion of said cylindrical chuck sleeve being formed with three radial openings at equally circumferentially spaced positions; a disc-shaped chucking die (30) slidably received in each said radial opening of said cylindrical chuck sleeve, said disc-shaped die having a diameter to fit into said radial opening and a peripherally stepped flat bottom portion (30c) projecting slightly into the bore (26a) of the chuck sleeve; a helical compression spring (32) wound around a peripherally stepped portion of said cylindrical chuck sleeve, a rear end of said helical spring bearing on a spring seat (32a) provided at an end portion of said cylindrical chuck sleeve and a front end bearing on the rear end of said driving sleeve, thus always urging said cylindrical chuck sleeve rearwardly, a socket (34) provided as an end portion of said bushing (16), said socket having external peripheral threads (34a) and a large central opening (34b); a chuck pusher (36) held into said socket with a circular plate spring (38) interposed between said inner portion of said socket and said chuck pusher, thus always urging said pusher rearwardly, said circular plate spring being provided with a large opening (38a) at the central portion thereof for allowing an axial displacement of said spring seat; and a cap (40) mounted on said external peripheral threads of both of said powerhead assembly and said socket; wherein the axial forward movement of said cylindrical chuck sleeve by said chuck pusher causes the formation of a space (S) between the tapered inner surface of said driving sleeve and the tapered outer surface of said cylindrical chuck sleeve and thereby allows radial outward movement of said disc-shaped chucking dies in said radial openings, thereby allowing axial insertion of said dental tool into the bore portion of said cylindrical chuck sleeve, and the axially rearward movement of said cylindrical chuck sleeve by said compression spring causes said disc-shaped chucking dies to narrow the said space (S) thereby causing said disc-shaped chucking die in said radial openings to centrally and circumferentially hold said dental tool by way of their said stepped flat bottom portions.

3.    A dental handpiece as claimed in claim 2, wherein each said disc-shaped chucking die has a diameter to fit into a said radial opening and a peripherally stepped flat bottom portion thereof is snugly received in position in said radial opening of said cylindrical chuck sleeve to hold said dental tool.

4.    A dental handpiece as claimed in claim 2 or 3, wherein each said disc-shaped chucking die has an umbrella-shaped head, a peripheral flange and a peripherally stepped flat bottom portion, and is snugly fitted into a said radial opening of said cylindrical chuck sleeve so that said peripherally stepped flat bottom portion  projects slightly into the chuck sleeve bore to hold said dental tool.

5.    A dental handpiece as claimed in claim 2 or 3, wherein a pair of diametrically opposed supporting legs on each chucking die are snugly received in a pair of bottomed slots formed diametrically and longitudinally in the outer part of each said radial opening of said cylindrical chuck sleeve.

FIG.1

FIG.2

FIG.3

FIG.4

*FIG.5*

*FIG.6*

*FIG.7*

*FIG.8*

*FIG.9*

European Patent Office

# EUROPEAN SEARCH REPORT

Application number

EP 83 30 3890

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-2 905 484 (DENTALWERK BÜRMOOS GMBH) * Page 7, line 16 - page 9, line 28; figure 1 * | 1,2 | A 61 C    1/14<br>A 61 C    1/05 |
| | --- | | |
| Y,A | DE-A-2 122 465 (M.K. PRODUCTS INC.) * Page 11, line 5 - page 13, line 1; figures 2, 3 * | 1-3 | |
| | --- | | |
| Y,A | FR-A- 688 048 (WARNIMONT) * Page 1, line 50 - page 2, line 26; figures 1, 2 * | 1,2,4 | |
| | --- | | |
| A | DE-C- 969 644 (GARNIER) | | |
| | --- | | |
| A | US-A-3 418 715 (ELLIS) | | |
| | ----- | | |

TECHNICAL FIELDS SEARCHED (Int. Cl. ³)

A 61 C    1/00
B 23 B    31/00

The present search report has been drawn up for all claims

| Place of search | Date of completion of the search | Examiner |
|---|---|---|
| BERLIN | 20-09-1983 | SIMON J J P |